# EUROPEAN PATENT APPLICATION

(11) **EP 3 719 493 A1**
(43) Date of publication of application: **07.10.2020**
(21) Application number: 19167592.5
(22) Date of filing: 05.04.2019
(51) Int. Cl.: G01N 30/60, B01D 15/22, G01N 30/02

(54) **METHOD AND DEVICE FOR SAMPLE PREPARATION**

(71) Applicant: Biotage AB, 751 03 Uppsala (SE)
(72) Inventor: WILLIAMS, Lee, NEWPORT, Gwent NP10 9NJ (GB); GJERDE, Douglas, SARATOGA, CA California 95070 (US); DAVIES, Geoff, NEWPORT, Gwent NP10 9JU (GB); HOANG, Lee, SANTA CLARA, CA California 95051 (US); THOMPSON, James, Pontyclun Rhondda Cynon Taff CF72 9LS (GB)
(74) Representative: Brann AB

(57) **Abstract**

The present invention relates to method for performing microextraction of samples with low entrainment of air. More specifically, the invention relates to a microelution column (1) comprising a column body (2) including a bottom frit (3) and a top frit (4), wherein the column body includes an adsorbent (5) arranged between the bottom frit (3) and the top frit (4), and a filter frit (6) has been arranged above the top frit. The invention also relates to a plate including such columns, and a method of use.

## Description

### Technical Field

The present invention relates to the area of separation, such as recovery of analytes, and provides tools and methods for making sample preparation more efficient. More specifically, the invention relates to a microelution column; a plate including one or more such columns; and a sample preparation method that enables the use of smaller elution volumes.

### Background of the invention

Microelution techniques were developed primarily to address the need for a reduction in solvent use, and also in the size of extraction instrumentation. Typically, in such methods, the volume of the extracting phase is very small in relation to the volume of the sample, washing buffer and elution buffer.

Most commercially available microelution type plate products operate with elution volumes of 50 µL and larger. Often elution volumes are applied in two equal aliquots to recover materials from bed mass of 2 and 5 mg of material. One reason large elution volumes are used is to prevent low and/or inconsistent recovery of the analyte species from the column beds of the plate. There are several causes of low or inconsistent recovery. The column may channel due to non-uniform bed packing. Liquid flow may channel through the bed of the column leaving resin in the column or portions of the bed incompletely reacted untouched by sample, washing and/or elution solutions. Poor or inconsistent flow in any of these steps may require large buffer volumes, especially in the washing and elution steps, to ensure that all column media is contacted and reacted by the solvents/buffers. As the column bed size is decreased, uniformity of the packed bed is more difficult to achieve.

Any column used in top-down flow of a microelution column may contain air trapped or partially trapped in the bed of the column. In fact, this is an artefact on how plates operate and is part of standard practice. Air may unintentionally be introduced simply by the continuous top pressure, or bottom vacuum, applied to the column even after liquid has exited the bed.

Another way that air is unintentionally introduced to an adsorbent bed is by an air gap process. An "air gap" is the air trapped between the top of the column bed and the slug of liquid introduced to the top of the column bed. With an air gap present, as the liquid on top of the air gap is forced through the column by pressure at the top of the column bed or vacuum at the bottom of the column, air will be forced through the column bed. This may result in air being partially and unpredictable retained in the column bed.

This kind of undesired air in the column bed is known as entrained air. Air may be introduced in any of the liquid flow steps of conditioning, sample loading, sample washing or sample elution. Air in the bed can interrupt the flow of liquid so that flow through the column is neither consistent nor predictable, e.g. due to channeling of the flow. It can also change the flow rate of liquid flowing through the column. A plate based column may contain large dead volumes that must be cleared with the introduction of any buffer step. In this situation, large elution volumes will be required to give multiple chances of eluting and recovering the analytic species of interest while smaller elution volumes result in low recovery of material and also an inconsistent from column-to-column recovery of materials.

In the field of sample preparation, there exists a need to improve consistency of recovery as well as the mass recovery of analytes from plate type solid phase extraction columns. There is also a need for small elution volumes while maintaining complete mass recovery of the analyte from the resin in the plate type columns. As explained above, there exists a need to reduce the amount of entrained air in the column beds of a plate, and there is a need to avoid introducing air into the column beds of a plate. Finally, there exists a need to avoid the air gap when introducing liquid into the column beds of a plate.

WO 2005/070141 (Phynexus, Inc.) relates to extraction columns for the purification of an analyte, such as a peptide, protein or nucleic acid. The described columns may be characterized by low backpressure in use, and in some embodiments, it is stated that elution of analyte in a small volume of liquid may be obtained.
The column bodies may be made from a wide range of materials, such as plastic, glass, ceramics or metals. Further, the extraction columns include one or two frits, such as membrane screens, which may be characterized by low pore volume. The polarity of the membrane screen can be important - a hydrophilic screen will promote contact with the bed and promote the air-liquid interface setting up a surface tension; while a hydrophilic screen would not promote surface tension and therefore the threshold pressures to flow would be different. The use of a hydrophobic membrane as the top and/or bottom frit can improve flow characteristics of the column, particularly in automated implementations such as in robotic liquid handling systems.

US 4,779,467 (Rainin Instruments Co., Inc.) relates to a liquid-end assembly for multichannel air-displacement pipettes having a modular construction, which enables individual components to be easily replaced when they become contaminated or worn. The assembly also enables selected piston and cylinder components to be selectively removed so that a number less than all of the channels can be employed for pipetting without first stabbing tips and then removing by hand or rearranging the tip array. More specifically, this is achieved by the liquid-end assembly further comprising modular piston means comprising a cylindrical rod having a first end and a second end, wherein the piston means comprises spring capturing means disposed proximate the first end of the rod.

Despite the products and art available, there is still a need in the area of sample preparation, and specifically in the area of solid phase microextraction (SPME), for more efficient methods allowing fast analysis with as little use of liquids and reagents as possible, especially in automated parallel processing of multiple samples.

### Summary of the invention

One aspect of the invention is a microelution column comprising a column body including a bottom frit and a top frit, wherein the column body includes adsorbent arranged between the bottom frit and the top frit, and a filter frit has been arranged above the top frit.

Another aspect of the invention is a plate for parallel processing of samples, which includes a plurality of positions into which one or more columns according to the invention have been arranged.

A further aspect of the invention is a method of preparing a sample for subsequent analysis, wherein an aliquot of elution solvent in the range of 1-50µl is applied to the top of the column according to the invention.

Further details, advantages and embodiments of the present invention will appear from the dependent claims as well as from the detailed description below.

### Brief Description of the Drawings

Figure 1 shows a single microelution column 1 according to the invention including a bottom frit 3 and a top frit 4, and an adsorbent 5 arranged between the bottom frit 3 and the top frit 4. An annular ridge 7 arranged to enable its positioning in a Y-direction in the plate 9 appears clearly.
Figure 2 shows a single microelution column 1 according to the invention, which in addition to the features described in Figure 1 also shows a filter frit 6.
Figure 3a-b show a microelution column 1 according to the invention in two different perspectives, including a collar 8 and flat surfaces 9.
Figure 4a-c show a plate 10 according to the invention in three different perspectives, including a plurality of positions 11 arranged to receive one or more columns 1 according to the invention as well as means arranged to receive the annular ridge 7 of each column.
Figure 5a-b show a plate 1 according to the invention by an illustrative side view (Figure 5a) and an illustrative top view (Figure 5b).
Figure 6 illustrates how buffer may be applied to the top of a column 1 according to the invention with hydrophilic wall 13 and hydrophilic top frit 4. A buffer dispenser tube 15 is shown.
Figure 7 illustrates how buffer may be applied to top of the column 1 according to the invention with hydrophobic wall 14 and hydrophilic top frit 4, where the diameter of the buffer droplet 15 is less than the diameter of the column above the top frit.
Figure 8 illustrates how buffer may be applied to the top of the column 1 according to the invention with hydrophobic wall13 and hydrophilic top frit 4 where the droplet touches the frit. The droplet flows along the wall of the column and covers the top of the column bed frit.

### Definitions

The term " microelution" is used herein in its broadest sense including small volume elution from extraction columns as the final step to recover desired materials.

The term "column" is used herein in its conventional meaning in the area of sample preparation that is a chamber arranged to receive an adsorbent.

The term "adsorbent" is used herein include a material whereby material are adsorbed to a solid phase media, normally a higher surface material. Adsorbent is sometimes referred to as the bed, or a resin.

The term "frit" as used herein in its conventional meaning in the area of sample preparation, i.e. for a porous material arranged for holding extraction media in place in a column. The frits are sometimes referred to herein as 'screens'.

The term "filter frit" as used herein is a screen, membrane or frit material positioned above the inlet frit to remove particulate material from the liquid entering the column bed.

The term "solid phase extraction" as used herein is defined as a sample preparation process by which compounds that are dissolved or suspended in a liquid mixture are separated from other compounds in the mixture by adsorption to column media according to their physical and chemical properties.

The term "elution volume" as used herein is defined as the volume of elution liquid, sometimes known as desorption liquid, into which the analytes are desorbed and collected.

The term "biomolecule" as used herein refers to molecules derived from a biological system, such as proteins, peptides, and nucleic acids.

### Detailed Description of the invention

As appears from the above, the present invention relates to a method and an apparatus for the low i.e. small volume elution and recovery of materials e.g. from a solid phase extraction plates.

In a first aspect, the invention relates to a microelution column 1 comprising a column body 2 including a bottom frit 3 and a top frit 4, wherein the column body includes an adsorbent 5 arranged between the bottom frit 3 and the top frit 4, and a filter frit 6 has been arranged above the top frit.

The columns of the invention are advantageously used in a plate format, either for parallel processing in a top-down flow format when arranged in the plate; or from which plate the column may be removed and used as pipette tip columns in a back and forth flow tip column format.

To improve their use in the plate format, the columns according to the invention may include means that prevents its movement in Y-direction, such as an annular ridge 7 or other protrusion arranged to receive a supporting part of the well of the plate 10.
Further, to prevent or at least substantially reduce its movement in X-direction when arranged in a plate, the column according to the invention may include a collar 8 arranged at the upper part of the column body which includes at least two opposing flat surfaces 9, such as four flat surfaces i.e. two pairs of opposing surfaces.

Advantageously, the adsorbent 5 has been loaded in a volume that substantially avoids any void volume below the top frit 4, i.e. between the top frit and the adsorbent 5. Differently worded, in order to avoid the above-discussed problem of air entrainment, the loading of the adsorbent into the space between the bottom frit 3 and the top frit 4 is performed to minimize any free space or air.

The bottom frit 3 may be of low porosity, such as the frits described in the above-discussed WO 2005/070141. Further, the bottom frit 3 may be water-wettable, i.e. substantially hydrophilic. To enable advantageous addition of sample, as will be discussed in more detail below, the top frit 4 may be water-wettable, i.e. substantially hydrophilic. The column body 2, or at least the inside of the column body, may be hydrophobic, or at least substantially hydrophobic. However, as an alternative that changes certain properties and performance, the inside of the column body 2 may be water-wettable i.e. substantially hydrophilic.

A column according to the invention may be configured for top-down column flow, in which case the filter frit 6 is configured to enable the removal of large particles such as contaminants originating from biological samples. In this context, it is understood that the term top-down flow is understood to mean the position of the column in conventional use in a plate, or as a pipette tip.

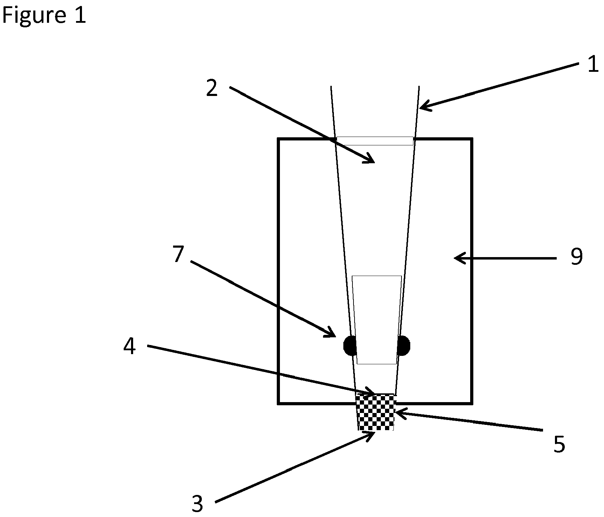

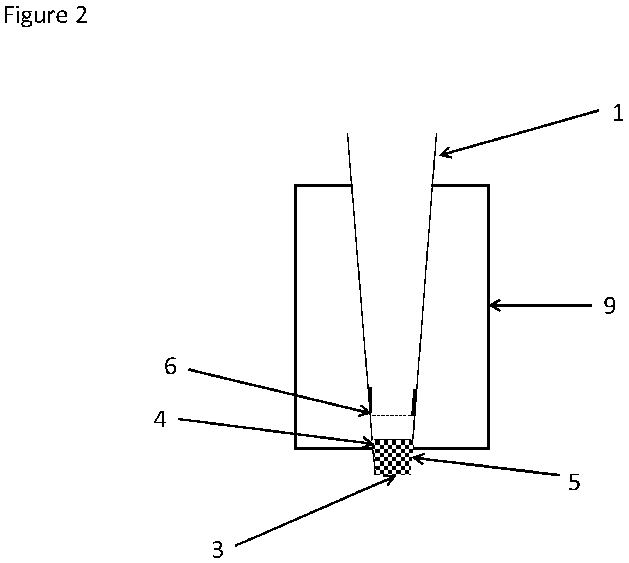

As appears from Figures 1 and 2, the bottom and top frit serve to contain the bed of adsorbent 5. The filter screen removes material in samples preventing plugging of the column bed. In some embodiments, there is a 0.1-20 mm gap between the filter frit and top frit of the column. In some embodiments, the gap is between 0.5 mm and 10 mm. In some embodiments, the gap between the top frit and filter frit is 0.5, 1, 2, 4 and 5 mm.

In columns of the invention, the dead volume (i.e. the interstitial volume of liquid held in the filter pores) of the filter frit is in the range of 0.05µl - 5µl. In some embodiments, the dead volume is in the 0.05µl - 2 µl. In some embodiments, the dead volume is in the 0.1 µl - 1 µl.

The skilled person may select suitable porosity and other dimensions of the bottom, top and filter frit depending e.g. on the nature of the sample and the purpose of the microelution.

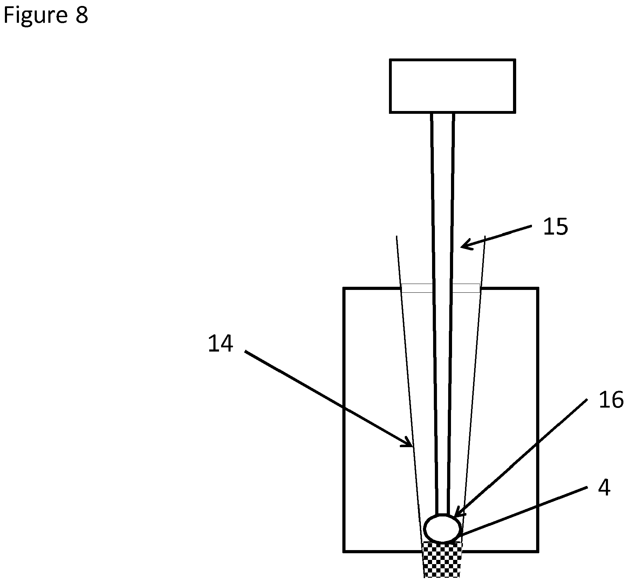

In another aspect of the invention, the invention relates to a plate 10 suitable for parallel processing of samples, which includes a plurality of positions 11 into which one or more of the columns according to the invention have been arranged.
Advantageously, each well of such a plate will comprise means 12 to engage with the annular ridge 7 of each column. Further, the plate of the invention may comprise means arranged to receive two or more flat surfaces 9 arranged in the upper part of each column, such as in or with a collar 8, as exemplified in Figure 8. Thus, the plate may be squared in a fashion that fits the flat surface(s) of the column collars.

As appears from the above, the plate of the invention may be an interchangeable plate with optional removable pipette tip columns. The plate of the invention may be constructed to receive a plurality of columns arranged in parallel where the columns may be removed and used as tip columns. In one embodiment, the plate operates in a 96 column format in an 8x12 row configuration. Microelution of columns of the plates may be accomplished by controlling the frit polarity and plastics.

As discussed briefly above, the columns of the invention may be a combination of components that include water-wettable screen frits and optional water wettable polymer wall. The columns are constructed and used to avoid air gaps with the introductions of liquids, especially low volume liquids to the top of the column. If air becomes entrained in the column, hydrophilic frits on both ends of the column and low dead spaces within the column allow the expulsion of much of the air with the introduction of the next liquid volume. The plate is a true low volume plate format that can optionally be a flexible plate/tip format. More than 90% of the elution volume introduced into the column bed may be recovered, even with elution volumes less than 50, 45, 40, 35, 30, 25, 20, 15 and even 10 µL for a 2 mg mass column bed. More than 90% of the elution volume introduced into the column bed may be recovered, even with elution volumes less than 50, 45, 40, 35, 30, 25, 20, 15, 10 and even 5 µL for a mass column bed in the range of 0.2 - 2 mg. More than 90% of the elution volume introduced into the column bed may be recovered, even with elution volumes less than 50, 45, 40, 35, 30, 25 and even 20 µL for a mass column bed in the range of 2 - 20 mg.

The bed mass of columns located in the columns of the plate may be in the 2, 5, 10 or 20 mg range. The bed mass of columns located in a 96 column plate may be in the 0.1 - 10 mg and the 0.2 - 5 mg ranges

Columns of the invention allow the removal of air gap so that introduction of air in the column bed can be avoided. In one embodiment this is accomplished by the frit and column wall being hydrophilic so that liquid added slides down the wall and the column and covers the frit not allowing air to enter the column bed. In another embodiment this is accomplished by having a hydrophilic frit and dropping liquid into the bed where the diameter of the drop is less than the diameter of the column above the frit. In another embodiment this is accomplished by depositing the drop of liquid so that the bottom of the drop touches and covers the hydrophilic frit.

In a further aspect, the invention relates to a method of preparing a sample for subsequent analysis, wherein at least one sample having a volume in the range of 100-400µl is applied to a column according to the invention.
Low or micro elution volumes are possible with plates of the invention. Thus, the sample may applied to a column 1 loaded with adsorbent 5, and elution may be performed in a subsequent step by applying an eluent having a volume in the range of 1-50 µl. For example, columns in the mass weight of 2 - 5mg of adsorbent weight may be eluted in elution volumes of 50 µL and below, where the ratio of elution volume / recovery volume is in the range of 0.9-1.0.

The method may be a top-down column flow method, wherein the sample is applied to filter frit 6.

Alternatively, the method is a pipetting method, wherein the sample is aspirated and passes the bottom frit 3 to contact the adsorbent 5 arranged between the bottom frit 3 and the top frit 4.

In some embodiments, high pressure is used to force liquid through the column in the plate. This high pressure serves to remove entrained air that may be contained in the bed thus improving the contact of liquids to the media contained in the column beds. However, high pressures also serve to increase dramatically the liquid flow rate and the linear velocity of liquid through the bed. Pressures of 2-30 psi, 3-25 psi, 4-20 psi, 5-15 psi and 5-10 psi may be used in plates of the invention while retaining capture of the molecules to the solid phase media. It is surprising that these high pressure ranges can be used in the column plates of the invention because high linear velocity normally will limit capture of molecules due to slow capture kinetics.

In one embodiment of the invention, columns and plate of the invention with columns in the sorbent mass weight range of 2 - 5 mg for an individual column bed; elution may be performed with less than 50 µL elution volumes with recoveries of analytes in the 90 - 100 % range. In another embodiment of the invention, for elution volumes less than 50 µL the ratio of applied elution volume / recovered volume is in the range of 0.9 - 1.0. In another embodiment of the invention, for elution volumes less than 50, 45, 40, 35, 30, 25, 20 and 15 µL the ratio of applied elution volume / recovered volume is in the range of 0.9 - 1.0. Less than 50 µL elution volumes applied volumes applied to the top of the columns in the plate of the invention allow complete flow of the volume bed and is not trapped by dead spaces that may be contained within the column bodies, beds or frits. Surprisingly, even with entrained air in the bed of the columns of the invention, these small elution volumes can be used and recoveries up to 90-100% may be achieved.

The columns are designed to be able to add elution volumes of less than 50, 40, 30, 25, 20, 15, 10 and 5 µL to the top frit of the column without introducing an air gap to the top of the column.

The plate containing columns may be configured into an 8 x 12 (96 column) format but the plate is not limited to this configuration. Plates of the invention can have any number of rows and columns. The plate can be processed in a 96 well plate type format. In some embodiments, the tip columns may be removed from the plate and can be processed in 1 - 2, 1 - 4, 1 - 8, 1 - 12 or 1 - 96 pipette pump format. Pipette tip column from the plate of the invention may be process in 2, 4, 8 multichannel pipette format.

The elution volumes may be as low as 25 - 50 µL, 20 - 50 µL, 15 - 50 µL or the 10 - 50 µL range. Elution volumes may be added in one aliquot. The elution volume (EV) in µL to bed mass (BM) in mg ratio (the EV:BM ratio) may be less than 25, 20, 15, 10, 5, 4, 3, or 2 for column bed mass of 20, 15, 10, 5, 4, 3, 2, 1 and 0.5 mg. Surprisingly smaller mass beds in the plate and column of the invention can accommodate smaller EV:BM ratios as the bed mass is decreased. This is the opposite of would be expected by someone skilled in the art.

In some embodiments, the column beds are expressed in volume rather than mass. In this case, the elution volume (EV) in µL to bed volume (BV) in µL ratio (the EV:BV ratio) may be less than 10, 5, 4, 3, or 2 for column bed volumes of 50, 40, 30, 20, 15, 10, and 5 µL. Similarly, small volume beds in the plate and column of the invention can accommodate smaller EV:BV ratios as the bed volume is decreased.

The columns are removable from the plate and may be used in a back and forth flow tip column format.

The columns are designed to be able to add elution volumes of less than 50, 40, 30, 25, 20, 15, 10 and 5 µL to the top frit of the column without introducing an air gap to the top of the column.

The plate is configured into an 8 x 12 format but is not limited to this configuration. It can have any number of rows and columns. The plate can be processed in a 96 well plate type format or tip columns from the plate can be process in 1 - 2, 1 - 4, 1 - 8, 1 - 12 or 1 - 96 pipette pump format. Tips removed from the plate may be process with multichannel pipette heads in the 2, 4, 8 and 12 channel pipette format.

The placement of the end of the column (or bottom frit) relative to the bottom of the collection well is within about 5 mm of the bottom of a 350 µL collection plate thus avoiding splashing, aerosol formation due to high flow rates.

The diameter of top frit and elution frits for 96 column plate is in the range of 0.1 to 4 mm and in the range of 1 to 2 mm.

The columns can be sealed into plate format with an annular ridge while individual tip columns are also removable from the plate.

Plate solid phase extraction with a 5 mg or less bed mass where the sample addition is performed using a filtration aid.

The optional modular dual column format used tip columns that are compatible with 96 at a time plate format and a 1-96 pipette tip column format having:
a) annular ridge on column body to seal column into plate
b) flat edges at top of columns to restrict movement of the column top in the plate
c) where columns may be removed from plate and with pipetting head

A sample prepared by a method according to the invention may be further analysed in a subsequent step e.g. by mass spectrometry, such as by LC-MS or LC-MS/MS.

### Detailed Description of the Drawings

Figure 1 shows a single microelution column 1 according to the invention including a bottom frit 3 and a top frit 4, an adsorbent 5 arranged between the bottom frit 3 and the top frit 4. The ridge 7 arranged to enable its positioning in a Y-direction in the plate appears clearly. The column 1 may be permanent or optionally removable and used as a pipette tip column. The average diameter of the small mass column may be in the range of 1 - 4 mm, as discussed in further detail in the section Detailed description above.

Figure 2 shows a single microelution column according to the invention, which in addition to the features described in Figure 1 also shows a filter frit 6. The filter frit 6 may have different size opening to filter large particles contained in samples preventing plugging of the tip column.

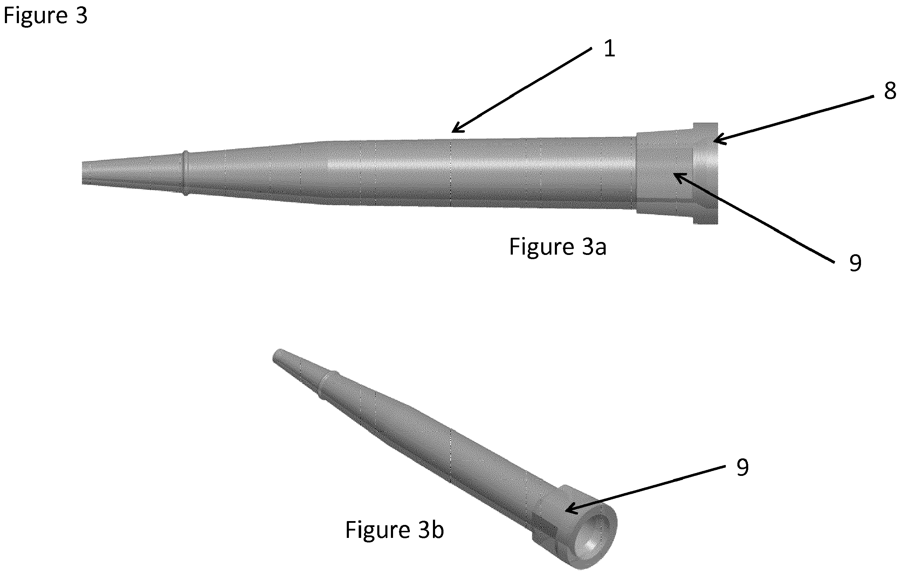

Figure 3a-b show a microelution column according to the invention, including the collar 8 and flat surfaces 9.

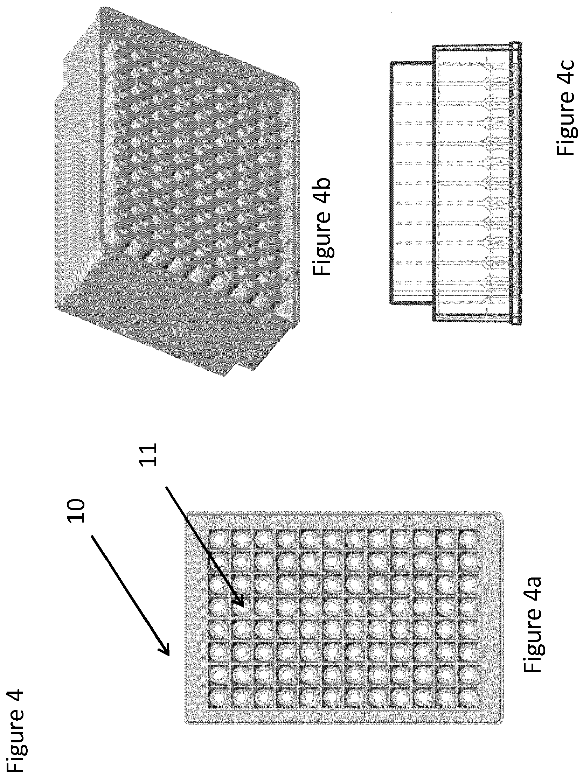

Figure 4a-c show a plate 10 according to the invention, including means 11 arranged to receive the ridge 7.

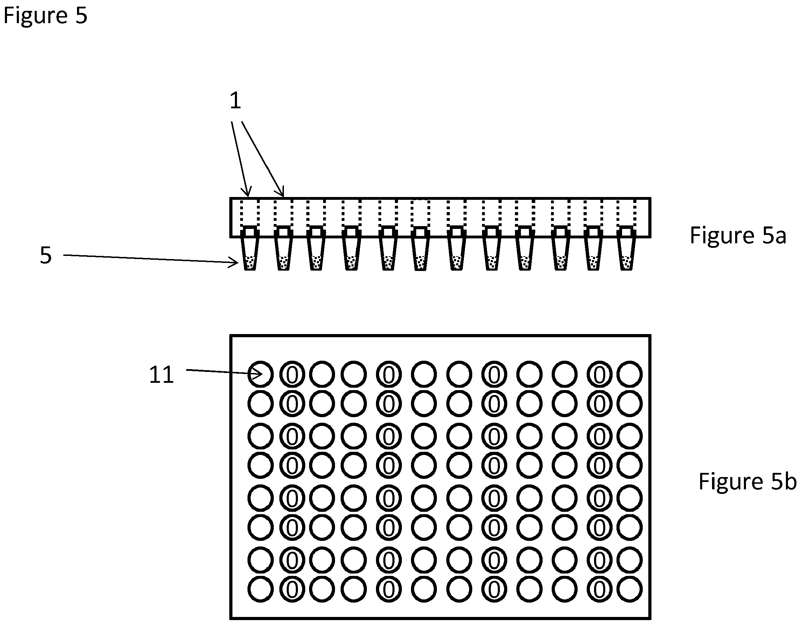

Figure 5a-b show a plate 10 according to the invention by an illustrative side view (Figure 5a) and an illustrative top view (Figure 5b). The plate shown is arranged for loading, washing and elution of column by top down column flow. Air may be prevented from entering the column bed when using small elution volumes. The columns 1 may be embedded into the plate; or they may be removable. The optional modular dual column format uses tip columns that are compatible with 96 at a time plate format and a 1-96 pipette tip column format having and annular ridge 7 on column body 2 to seal each column 1 into the plate 10. Flat surfaces may advantageously be arranged at the top of each column 1 to restrict the movement in X-direction of the columns in the top of the plate 10.

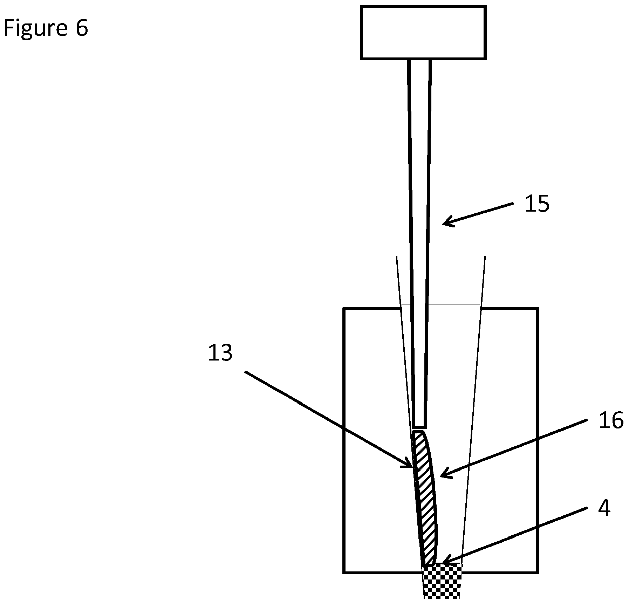

Figure 6 illustrates how buffer may be applied to the top of a column 1 according to the invention with hydrophilic wall and hydrophilic top frit 4. Buffer is applied to the top of the column 1 with hydrophilic wall and hydrophilic top frit 4. The droplet 16 will travel down the side of the column wall to prevent the formation of an air gap between the aliquot of liquid and the top of the column. The droplet touches and covers the hydrophilic top frit 4.

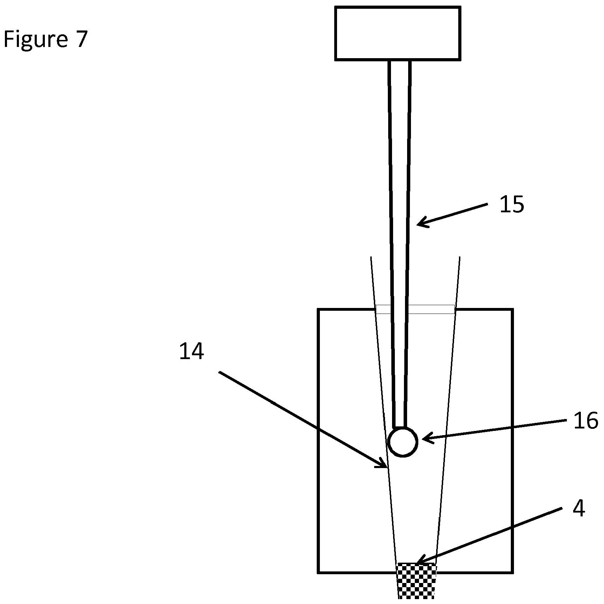

Figure 7 illustrates how buffer may be applied to top of the column 1 according to the invention with hydrophobic wall and hydrophilic top frit 4, where the diameter of the droplet 16 is less than the diameter of the column above the top frit 4. Buffer is applied to top of the column with hydrophobic wall and hydrophilic top frit 4 where the diameter of the droplet is less than the diameter of the column above the frit. The droplets are formed as liquid is applied to the top of the column. The droplets do not touch the walls to form an air gap.

Figure 8 illustrates how buffer may be applied to the top of the column 1 according to the invention with hydrophobic wall and hydrophilic top frit 4 where the droplet 16 touches the top frit 4. The droplet flows along the wall of the column and covers the top of the top frit 4. Buffer is applied to the top of the column with hydrophobic wall and hydrophilic top frit 4 where the droplet touches the frit. The droplet covers the top of the top frit 4 and top of the adsorbent 5. An air gap is not formed. The dispensing tube 15 may be raised as the liquid is dispensed.

### EXPERIMENTAL

The present examples are provided for illustrative purposes only, and are not to be construed as limiting the invention as defined by the appended claims. All references provided below and elsewhere in the present application are hereby included herein via reference.

### Columns:

The low volume format (LVF) columns according to the invention used in the examples below were prepared from high purity polypropylene in a shape corresponding to Fig. 1. The column dimensions were as follows: 2 mg [see Table]

The frits (denoted screens below) arranged in the columns used herein were all made from nylon in accordance with standard methods, and presented the following properties:

### Bottom and top frits:

25:19 (given as pore diameter (µm): % open)
Filter frit:
   105:52 (given as pore diameter (µm): % open)

The adsorbents (denoted resins below) used in the examples were commercially available from Biotage (https://biotage.com/), unless otherwise indicated. Adsorbent was loaded in the columns between the bottom frit and the top frit until substantially no space was left between the adsorbent and the top frit.

### Example 1: Flow properties of microelution columns according to the invention

### Experimental set up and Conclusion

Low Volume Format (LVF) columns arranged in plates (Figure Y) were processed on Biotage® Extrahera™ (https://biotage.com/) in triplicate to determine flow characteristics.

A variety of screens were investigated based on the particle size of the EVOLUTE ABN 20 µm and 30 µm material.

The shortest processing times and lowest applied pressures were observed using ABN 30 µm resin. For both resins the shortest processing times and lowest pressures were observed using single top '105:52' screens (though the differences were often minimal) and processing times were faster than when performed manually on the pressure+.

### Materials

EVOLUTE ABN 20 µm and 30 µm, 5 µL Phynexus PhyTips (https://phynexus.com/).

**Table 1: Screen Configuration (pore diameter (µm) : % open)**

| **Top Screen(s)** | **Bottom Screen** |
|---|---|
| 25:19 | 25:19 |
| 105:52 | 25:19 |
| 25:19 & 105:52 | 25:19 |
| 105:52 & 105:52 | 25:19 |

### Methods

Triplicate LVF wells for each particle diameter and screen configuration were populated in row A of a Biotage LVF base plate (Figure Y).

### Samples

Urine samples [obtained from where] were treated in accordance with standard procedures for plasma samples [incl. ref].

LVF wells were processed using the Biotage EVOLUTE ABN on an Extrahera in manual mode. A positive pressure setting of 2.0 bar was used for all steps as this was judged to initiate flows when run on a used set of 20 µm tips. The pressure was increased to 5.0 bar for 30 seconds prior to the final elution step though this did not result in any additional drops coming off of the tips.

**Table 2: ABN Generic Processing Method**

| **Step** | **Details** |
|---|---|
| Condition | 200 µL MeOH |
| Equilibrate | 200 µL 0.1% HCOOH |
| Load | 200 µL plasma 1:1 1% HCOOH |
| Wash | 200 µL 5% MeOH (aq) |
| Elute | 200 µL MeOH |

Flows were judged by measuring the time from when the pressure head comes down to when the last full drip comes off of each tip measuring the range from the earliest of the three tips to pass the solvent to the last of the three. These times were determined accurately by videoing each step and monitoring each tip individually by reviewing the film. Close-up images from a selection of tips were also taken at various time points [add ref to Figure if we want to include]. Some solvents were slightly dyed in colour to try and make them more visible though this did result in the colour concentrating on the tip media on occasions.

### Observations

### a) ABN 30 µm, 5 µL PhyTip LVF Extrahera Processing

All of the tips were comfortably processed using a positive pressure of 2 bar. When viewing all varieties at the same time there was generally little difference of flow from one variety of tip to another however the 30 µm were faster than the corresponding 20 µ variant. When studying individual batches the single screen tips are very slightly faster eluting than the double screen and 105:52 tips slightly faster eluting than the 25:19 equivalents. Even later in the extraction procedure where the differences are maximised the effect it has on flow speeds is unlikely to be significant.

**Table 3: ABN 30µm - Top and double screen options (seconds, 2 bar)**

| Step | 105:52 + 105.52 | 25:19 + 105:52 | 105:52 | 25:19 |
|---|---|---|---|---|
| Conditioning | 11-13 | 11-15 | 11-12 | 10-13 |
| Equilibration | 12-13 | 15-16 | 12-13 | 12-13 |
| Load | 21-25 | 20-25 | 19-21 | 22-26 |
| Wash | 20-21 | 21-28 | 21-23 | 22-25 |
| Elute | 14-15 | 15-19 | 12-16 | 16-17 |

### b) ABN 20 µm, 5 µL PhyTip LVF Extrahera Processing

All of the tips were comfortably processed using a positive pressure of 2 bar. When viewing all varieties at the same time there was generally little difference of flow from one variety of tip to another however the 20 µm tips were slower. When studying individual batches the single screen tips are very slightly faster eluting than the double screen and 105:52 tips slightly faster eluting than the 25:19 equivalents. Even later in the extraction procedure where the differences are maximised the effect it has on flow speeds is unlikely to be significant.

**Table 4: ABN 20µm - Top and double screen options (seconds, 2 bar)**

| Step | 105:52 + 105.52 | 25:19 + 105:52 | 105:52 | 25:19 |
|---|---|---|---|---|
| Conditioning | 15-19 | 17-20 | 13-16 | 15-18 |
| Equilibration | 27-32 | 27-29 | 20-24 | 24-27 |
| Load | 29-36 | 35-38 | 28-32 | 30-33 |
| Wash | 29-34 | 30-34 | 27-31 | 32-41 |
| Elute | 19-24 | 21-24 | 15-17 | 16-23 |

### Example 2: Comparison of microelution columns with commercial product

### Summary

Low Volume Format (LVF) tips and OASIS µElution wells were processed to determine flow characteristics using two types of pre-treated plasma.

Typical flow characteristics were observed using fresh plasma with/without centrifugation and aged plasma with centrifugation.

### Materials

EVOLUTE ABN 30 µm, 5 µL, 105 µm + 25 µm top screens (PTE 93-05-XX) OASIS HLB µElution 30 µm
WBS plasma #5260 (aged, high precipitation)
WBS plasma #413 (fresh, low precipitation)

### Methods

An aliquot of each batch of plasma was centrifuged at 6500 x g for 10 minutes. The supernatant was transferred to a new container and any pellet discarded.

An aliquot of each batch of plasma without centrifugation (-C) and with centrifugation (+C) was diluted 1:1 with 1% formic acid.

LVF tips were populated in a Biotage LVF base plate. 200 µL sub-aliquots of each batch of pre-treated plasma (-C/+C) were transferred to duplicate LVF tips (due to numbers available) and triplicate µElution wells.

LVF wells were processed with a Pressure+ 96 positive pressure manifold using the maximum flow (coarse) setting; the µElution plate was processed using the variable flow (fine) setting. Processing pressures and times were recorded.

**Table 5: Processing time**

| **Plasma** | **LVF 30 µm, 5 µL (coarse)** | **µElution 30 µm (fine)** |
|---|---|---|
| #413 +C | 1 min, 4 psi + 1.5 min, 6 psi | 2 min, 6 psi |
| #413 - C | 1 min, 4 psi + 1.5 min, 6 psi | 2 min, 6 psi |
| #5260 +C | 1 min, 4 psi + 1.5 min, 6 psi | 2 min, 6 psi |

Processing of µElution wells was more straightforward, loading completed and flow ceased as expected using the fine setting. Processing LFV tips using the coarse setting resulted in completed tips exceeding the 'bubble point' of the components.

### Example 3: SPE

The present example describes Solid Phase Extraction (SPE) recoveries of a range of analytes obtained in LC-MS performed on samples prepared by SPE using either prior art columns (30 and 10 mg, respectively) or columns according to the present invention (2mg LVF)

This example was set up to show the high recoveries obtained with the microelution columns according to the invention using low elution volumes.

The LVF columns described in the Materials and Methods were used.

The sample was discard human plasma from the Welsh Blood Service, UK .

### Example 3a: LC-MS Analysis of ABN Mix 9

In this example, Mix 9 is an internal test mix for acids, basic and neutral drugs: Acetaminophen (neutral drug) Naltrexone Metoprolol Mianserin (basic drugs) Prednisolone (netural steroid) Ketoprofen Warfarin Sulindac Indomethacin (acidic drugs) for recovery determination of low elution volume SPE plate.
Solid phase resin: EVOLUTE ABN

### Method

1. Condition: MeOH
2. Equilibrate: 0.1% formic acid aq
3. Load: 5 ng in 200 µL (1:1, plasma : 1% formic acid)
4. Wash: 95/5 H₂O/MeOH
5. Elute: 50 µl MeOP
6. Dry: stream of air
7. Reconstitute: 1mL of mobile phase (80/20 H₂O/MeOH)
8. Analyze Waters Acquity UPLC interfaced to a Premier XE triple quadrupole Mass spectrometer, 10 µL injections
9. Data analysis using internal and external standards

**Table 6:**

| Column bed mass | Condition | Equilibrate | Load | Wash | Elute |
|---|---|---|---|---|---|
| 30 mg FWP | 1 mL | 1 mL | 0.2 mL | 1 mL | 0.5 mL |
| 10 mg FWP | 0.5 mL | 0.5 mL | 0.2 mL | 0.5 mL | 0.2 mL |
| 2 mg LVF | 0.1 mL | 0.1 mL | 0.2 mL | 0.1 mL | 2x 25 µL |

**Table 7: 30 mg Columns FWP**

| Acetaminophen | Naltrexone | Metoprolol | Mianserin | Prednisolone | Ketoprofen | Warfarin | Sulindac | Indomethacin |
|---|---|---|---|---|---|---|---|---|
| (% recoveries) | | | | | | | | |
| 104.9 | 139.8 | 128.2 | 171.2 | 150.8 | 208.5 | 144.8 | 181.8 | 105.8 |

| RSD | | | | | | | | |
|---|---|---|---|---|---|---|---|---|
| 10.1 | 26.1 | 26.4 | 64.8 | 34.2 | 64.4 | 51.7 | 61.9 | 52.3 |
| | | | | | | | | |

| 10 mg Columns FWP | | | | | | | | |
|---|---|---|---|---|---|---|---|---|
| (% recoveries) | | | | | | | | |
| 70.2 | 80. | 89.1 | 68.1 | 77.7 | 64.8 | 61.4 | 57.8 | 45.4 |

| RSD | | | | | | | | |
|---|---|---|---|---|---|---|---|---|
| 6.3 | 5.1 | 4.8 | 14.5 | 4.1 | 9.2 | 3.8 | 9.2 | 12.7 |
| | | | | | | | | |

| 2 mg Columns LVF | | | | | | | | |
|---|---|---|---|---|---|---|---|---|
| (% Recoveries) | | | | | | | | |
| 45.3 | 65.3 | 78.6 | 86.1 | 77.0 | 62.1 | 67.8 | 59.7 | 40.0 |

| RSD | | | | | | | | |
|---|---|---|---|---|---|---|---|---|
| 12.1 | 11.4 | 9.0 | 14.2 | 7.0 | 11.2 | 9.6 | 10.0 | 26.7 |

### Example 3b

The same example 3a with 2 mg LVF except a single aliquot of less than 50 µL is used to elute the analytes. The aliquot is successful in elution the anlyte with a single aliquote of elution with 20, 30, 40 or 45 µl of methanol.

### Example 3c

The same as example 1 with 2 mg LVF except a single aliquot of 25 µL buffer is applied to the top of the plate column with hydrophobic wall and hydrophilic frit. With an hydrophilic wall, the sample, washing solution and eluent are applied to the column with the liquid traveling down the wall of the column and reducing the air gap. Less air is introduced to the column bed as the column is processed.

### Example 3d

The same as example 1 with 2 mg LVF except a single aliquot of 25 µL buffer is applied to top of the plate column with hydrophobic wall and hydrophilic frit where the diameter of the droplet is less than the diameter of the column above the frit. The process prevents the introduction of the air gap into the column as the liquid is introduced into the column.

### Example 3e

The same as example 1 with 2 mg LVF except a single aliquot of 25 µL buffer is applied to the top of the plate column with hydrophobic wall and hydrophilic frit where the droplet touches the frit. The aliquot is applied in 1, 2 or more droplets and flow to cover the top of the column bed frit. The process prevents the introduction of the air gap into the column as the liquid is introduced into the column.

## Claims

1. A microelution column (1) comprising a column body (2) including a bottom frit (3) and a top frit (4), wherein the column body includes an adsorbent (5) arranged between the bottom frit (3) and the top frit (4), and a filter frit (6) has been arranged above the top frit.

2. A column according to claim 1, wherein the column body includes means that prevents movement in Y-direction once arranged in a plate

3. A column according to claim 2, wherein said means includes a ridge (7) adapted to rest on a protrusion arranged in a plate.

4. A column according to any one of the preceding claims, wherein the column body includes means that prevents movement in X-direction once arranged in a plate.

5. A column according to claim 4, wherein said means is a collar (8) arranged at the upper part of the column body which includes at least two opposing flat surfaces (9).

6. A column according to any one of the preceding claims, wherein the gap between the filter frit and top column frit is less than 10 mm.

7. A column according to claim 6, wherein the adsorbent (5) has been loaded in a volume that avoids any void volume below the top frit (4).

8. A column according to any one of the preceding claims, wherein the dead volume of the filter frit is less than 1µl.

9. A column according to any one of the preceding claims, wherein the elution volume is less than 50 µl.

10. A column according to any one of the preceding claims, wherein the bottom frit (3) is of low porosity.

11. A column according to any one of the preceding claims, wherein the bottom frit (3) is water-wettable.

12. A column according to any one of the preceding claims, wherein the top frit (4) is water-wettable.

13. A column according to any one of the preceding claims, wherein at least the inside of the column body (2) is water-wettable.

14. A column according to any one of the preceding claims, which is configured for top-down column flow and the filter frit (6) is configured to enable the removal of large particles such as contaminants originating from biological samples.

15. A plate (10) for parallell processing of samples, which includes a plurality of positions (11) into which one or more columns according to any one of claims 1-14 has been arranged.

16. A plate according to claim 15, wherein each well comprise means (12) to engage with the ridge (7) of a column according to any one of claims 1-14.

17. A method of preparing a sample for subsequent analysis, wherein at least one sample having a volume in the range of 100-400µl is applied to a column according to any one of claims 1-14.

18. A method according to claim 17, wherein the sample is applied to a column (1) loaded with adsorbent (5), and elution is performed in a subsequent step by applying an eluent having a volume in the range of 1-50 µl.

19. A method according to claim 17 or 18, which is a top-down column flow method wherein the sample is applied to filter frit (6).

20. A method according to claim 17 or 18, which is a pipetting method wherein the sample is aspirated and passes the bottom frit (3) to contact the adsorbent (5) arranged between the bottom frit (3) and the top frit (4).

21. A method according to any one of claims 17-20, wherein the sample is prepared for subsequent analysis including mass spectrometry, such as LC-MS or LC-MS/MS.
